# EUROPEAN PATENT APPLICATION

(11) **EP 3 138 869 A1**
(43) Date of publication of application: **08.03.2017**
(21) Application number: 15460078.7
(22) Date of filing: 23.09.2015
(51) Int. Cl.: C08H 8/00, C07G 1/00

(54) **METHOD FOR PRODUCING POLYOLS FROM LIGNOCELLULOSIC BIOMASS**

(30) Priority: 02.09.2015 PL 41378815
(71) Applicant: Politechnika Gdanska, 80-233 Gdansk (PL)
(72) Inventor: Piszczyk, Lukasz, 80-107 Gdansk (PL); Danowska, Magdalena, 80-107 Gdansk (PL); Kosmela, Paulina, 89-100 Naklo n. Notecia (PL); Hejna, Aleksander, 83-010 Rotmanka (PL); Wesierska, Kamila, 83-330 Zukowo (PL); Haponiuk, Jozef, 80-344 Gdansk (PL)

(57) **Abstract**

Method for obtaining polyols from lignocellulosic biomass based on the liquefaction of biomass in excess solvent where the said lignocellulosic biomass, containing cellulose and/or hemicellulose and/or lignin and hydroxycinnamic acids and/or ferulic acid ((E)-3-(4-hydroxy-3-methoxy-phenyl)prop-2-enoic acid) and/or coumaric acid ((E)-3-(4-hydroxyphenyl)-2-propenoic acid) in the amount ranging from 0.001 to 20 wt.% of total biomass, is dried until reaching the moisture content not higher than 30%, then it is liquefied by a chemical process or by means of microwave irradiation at a temperature of 100-300°C for 1-600 min with the application of solvents such as, alcohols from the class methanol, ethanol, propanol, butanol, pentanol, hexanol, and/or diols from the class ethane-1,2-diol, propane-1,3-diol, propane-1,2-diol, butane-1,3-diol, butane-1,4-diol, butane-2,3-diol and/or 2,2'-oxydiethanol and/or propane-1,2,3-triol and/or butane-1,2,3,4-tetraol (erythritol) and/or pentane-1,2,3,4,5-pentaol (ribitol) and/or polyhydroxy alcohols from the class poly(ethylene oxide), ethylene carbonate and/or glycerin filtrate effluent glycerin and/or raw glycerin. Brewer's spent grain is preferably used as lignocellulosic biomass.

## Description

The object of the invention is a method for producing polyols from lignocellulosic biomass that is applicable to manufacturing of environment-friendly polyurethane foams which could be used in different branches of industry such as, construction, furniture and automotive industries.

Plant-derived biomass forms during the conversion of atmospheric carbon dioxide into proteins, lipids and polysaccharides via an intermediary form of simple sugars. This process is initiated by solar radiation which breaks down water molecules. Cellulose, hemicellulose and lignin are among the components of plant-derived biomass. The possible other uses of biomass are related to the recycling of complex organic substances formed via photosynthesis, which are subjected to further processing to serve the purposes of energy sector or organic chemistry industry, based on the present needs.

Aging processes in polyols pose a technical problem. Polyols stored for longer periods of time lose their properties. Antioxidants (anti-aging compounds), also called thermo-oxidation stabilizers, prevent the polymer aging and subsequent processes such as, decomposition, branching, and cross-linking during the processing of materials. Antioxidants block the propagation reaction.

Based on the scientific research conducted at the Gdansk University of Technology, it was concluded that lignocellulose biomass originating from brewer's spent grain contains the advantageous mixture of hydroxycinnamic acids, i.e. ferulic acid ((E)-3-(4-hydroxy-3-methoxy-phenyl)prop-2-enoic acid) and coumaric acid ((E)-3-(4-hydroxyphenyl)-2-propenoic acid) that have antioxidant properties.

Unexpectedly, it was observed that the application of lignocellulosic biomass containing the aforementioned mixture of acids significantly improves the resistance to aging and thus storage stability of polyols used for obtaining polyurethane materials. Lignocellulosic biomass is an environment-friendly, alternative source of biopolyols that can be applied in the production of man-made materials, mainly due to its sustainability.

The invention relates to the method of obtaining polyols from lignocellulosic biomass via biomass liquefaction in an excessive amount of solvent which is characterized in that the lignocellulosic biomass containing cellulose, and/or hemicellulose, and/or lignin and hydroxycinnamic acids and/or ferulic acid ((E)-3-(4-hydroxy-3-methoxy-phenyl)prop-2-enoic acid), and/or coumaric acid ((E)-3-(4-hydroxyphenyl)-2-propenoic acid) in the amount ranging from 0.001 to 20 wt.% of total biomass is dried until reaching the moisture content not higher than 30%, then it is liquefied by a chemical process or by means of microwave irradiation at a temperature of 100-300oC for 1-600 min with the application of solvents such as, alcohols from the class methanol, ethanol, propanol, butanol, pentanol, hexanol, and/or diols from the class ethane-1,2-diol, propane-1,3-diol, propane-1,2-diol, butane-1,3-diol, butane-1,4-diol, butane-2,3-diol and/or 2,2'-oxydiethanol and/or propane-1,2,3-triol and/or butane-1,2,3,4-tetraol (erythritol) and/or pentane-1,2,3,4,5-pentaol (ribitol) and/or polyhydroxy alcohols from the class poly(ethylene oxide), ethylene carbonate and/or glycerin filtrate effluent glycerin and/or raw glycerin.

Brewer's spent grain is preferably used as lignocellulosic biomass.

Liquefaction via chemical reactions is preferably conducted under pressure ranging from 1000 to 150000 Pa in the presence of strongly acidic or strongly basic catalysts such as, potassium hydroxide, sodium hydroxide, calcium hydroxide, magnesium hydroxide, aluminum hydroxide, iron hydroxide, nitrogen trihydride (ammonia), sulfuric(IV) acid, sulfuric(VI) acid, orthophosphoric acid, hydrochloric acid, nitric(III) acid, nitric(V) acid, chloric(III) acid, chloric(V) acid, chloric(VII) acid.

Liquefaction is preferably conducted by using microwave irradiation in the range 50-750 W.

In order to obtain a high-quality product, the biomass is initially liquefied. Liquefaction via chemical reactions is a high pressure-low temperature process based on solvolysis. The process leads to the formation of smaller molecules or fragments that are soluble in water or appropriate solvent. The small fragments are characterized by low stability and high reactivity, which allows their polymerization aimed at obtaining oily compounds with different molecular weights. The polymerization products can be used in the production of polyurethane materials, epoxy and phenolic resins, and adhesives. This is due to the fact that lignocellulosic biomass contains components with hydroxy groups whose presence can be used, inter alia, in the reactions with isocyanates.

Different polyhydroxy alcohols (poly(ethylene oxide), ethylene oxide, ethylene carbonate) are used in the liquefaction reactions. As a result of solvolysis, cellulose decomposes to glucose and low-molecular-weight cellulose derivatives. These compounds, in turn, can react with a solvent which leads to the formation of glycoside derivatives that can undergo further reactions resulting in the formation of levuline acid and its derivatives.

The amorphous components of biomass, such as lignin, hemicellulose and amorphous cellulose, are liquefied the fastest. On the other hand, liquefaction of crystalline cellulose is considered the slowest step limiting the overall rate of the process due to well-packed structure of crystalline cellulose which hinders the contact with a solvent. The selection of appropriate solvent is of utmost importance because it has to enable fast and efficient liquefaction of biomass as well as posses the physicochemical features desired for a polyol. This entails the use of quite excessive amount of solvent relative to the biomass weight. Therefore, the percent content of solvent in the final product is significant, which influences the properties of biopolyol and its future applications.

Polyols used in polyurethane synthesis are most frequently obtained with the use of alcohols with multiple hydroxy groups such as, poly(ethylene oxide), ethylene oxide, and ethylene carbonate. The reaction and composition of the obtained polyol closely depend on the conditions of the process (i.e. temperature, time and catalyst used), however, the biomass type and solvent play a key role. Moreover, liquefaction is a very complex and not fully understood process due to chemical composition of biomass, thus different, competing reactions can possibly occur. Besides the derivatives of cellulose and lignin or the molecules of solvent and their derivatives, the final products may contain saccharides, alcohols, aldehydes, ketones, phenols and organic acids.

According to the invention, liquefaction via chemical reactions and liquefaction aided by microwave irradiation in the presence or absence of solvents and catalysts are applied in order to obtain environment-friendly polyols. Acid catalysis, base catalysis, acid-base catalysis or base-acid catalysis are used in the liquefaction process of lignocellulose biomass.

The preferable property of the present invention is obtaining stable environment-friendly polyols which retain their characteristics during storage as well as the possibility of using waste materials produced by, for example, brewing industry that are more environment-friendly than the commonly applied petrochemical oligomerols. It also includes the production process which poses a lesser burden on the environment.

The invention is described in detail by using the examples of the use of the invention.
EXAMPLE 1. One-hundred-fifty grams of lignocellulose biomass (dried brewer's spent grain) and 30 g H₃PO₄ are added to 1000 g of ethanol, and the mixture is slowly heated to 150°C with stirring under a pressure of 80000 Pa in the reactor equipped with a distillation condenser. The process is conducted until distillate stops appearing in the apparatus, and then the mixture is cooled down to 50°C and 50% KOH in aqueous solution is added to achieve pH 7. Next, the mixture is heated to 120°C in order to remove excess water. According to the example, 900 g of polyol with an increased resistance to aging and hydroxyl number of 550 mg KOH/g is obtained.
EXAMPLE 2. One-hundred-fifty grams of lignocellulose biomass (dried brewer's spent grain) and 30 g H₂SO₄ are added to 1000 g of butane-1,3-diol, and the mixture is slowly heated to 140°C with stirring under a pressure of 90000 Pa in the reactor equipped with a distillation condenser. The process is conducted until distillate stops appearing in the apparatus, and then the mixture is cooled down to 50°C and 50% NaOH in aqueous solution is added to achieve pH 7. Next, the mixture is heated to 120°C in order to remove excess water. According to the example, 900 g of polyol with an increased resistance to aging and hydroxyl number of 350 mg KOH/g is obtained.
EXAMPLE 3. One-hundred grams of lignocellulose biomass (containing 19% lignin, 26% hemicellulose and 38% cellulose) and 30 g H₃PO₄ are added to 1000 g of the mix consisting of 500 g butane-1,3-diol and 500 g propane-1,2,3-triol, and the whole mixture is slowly heated to 150°C with stirring under a pressure of 80000 Pa in the reactor equipped with a distillation condenser. The process is conducted until distillate stops appearing in the apparatus, and then the mixture is cooled down to 50°C and 50% NaOH in aqueous solution is added to achieve pH 7. Next, the mixture is heated to 120°C in order to remove excess water. According to the example, 900 g of polyol with a hydroxyl number of 600 mg KOH/g is obtained.
EXAMPLE 4. One-hundred grams of lignocellulose biomass (containing 19% lignin, 26% hemicellulose and 38% cellulose) and 30 g H₃PO₄ are added to 1000 g of raw glycerin obtained from transesterification of rape oil, and the mixture is slowly heated to 170°C with stirring under a pressure of 80000 Pa in the reactor equipped with a distillation condenser. The process is conducted until distillate stops appearing in the apparatus, and then the mixture is cooled down to 50°C and 50% KOH in aqueous solution is added to achieve pH 7. Next, the mixture is heated to 120°C in order to remove excess water. According to the example, 900 g of polyol with a hydroxyl number of 450 mg KOH/g is obtained.
EXAMPLE 5. Four-hundred grams of lignocellulose biomass (containing 15% lignin, 35% hemicellulose and 50% cellulose) and 100 g 50% KOH in aqueous solution are added to 1000 g of raw glycerin obtained from transesterification of rape oil, and the mixture is slowly heated to 180°C with stirring under a pressure of 70000 Pa in the reactor equipped with a distillation condenser. The process is conducted until distillate stops appearing in the apparatus, and then the mixture is cooled down to 50°C and 50% H₂SO₄ in aqueous solution is added to achieve pH 7. Next, the mixture is heated to 120°C in order to remove excess water. According to the example, 950 g of polyol with a hydroxyl number of 380 mg KOH/g is obtained.
EXAMPLE 6. In the first stage of polyol synthesis, 200 g of lignocellulose biomass (containing 20% lignin, 25% hemicellulose and 30% cellulose) and 60 g 50% H₂SO₄ in aqueous solution are added to 1000 g of raw glycerin obtained from transesterification of rape oil, and the mixture is slowly heated to 180°C with stirring under a pressure of 80000 Pa in the reactor equipped with a distillation condenser. The process is conducted until distillate stops appearing in the apparatus. The second step involves base catalysis, namely, 50 g of 50% KOH in aqueous solution is added to the mixture, which is slowly heated to 200°C with stirring in the atmosphere of nitrogen gas until distillate stops appearing in the apparatus. According to the example, 900 g of polyol with a hydroxyl number of 480 mg KOH/g is obtained.
EXAMPLE 7. One-hundred grams of butane-1,4-diol and 10 g of lignocellulose biomass (dried brewer's spent grain) are mixed in a Teflon® dish and then placed in the microwave reactor. The liquefaction process is conducted for 10 min at a temperature of 160°C and power of 200W. According to the example, 110 g of polyol with an increased resistance to aging and hydroxyl number of 300 mg KOH/g is obtained.
EXAMPLE 8. Fifty grams of poly(ethylene oxide), 50 g of propane-1,2,3-triol and 10 g of lignocellulose biomass (containing 25% lignin, 35% hemicellulose, 35% cellulose) are mixed in a Teflon® dish and then placed in the microwave reactor. The liquefaction process is conducted for 10 min at a temperature of 160°C and power of 200W. According to the example, 110 g of polyol with a hydroxyl number of 600 mg KOH/g is obtained.
EXAMPLE 9. Eighty grams of ethylene carbonate, 20 g of butane-1,4-diol, 5 g of lignocellulose biomass (containing 25% lignin, 35% hemicellulose, 35% cellulose) and 3 g H₂SO₄ are mixed in a Teflon® dish and then placed in the microwave reactor. The liquefaction process is conducted for 5 min at a temperature of 180°C and power level of 500W. According to the example, 110 g of polyol with a hydroxyl number of 400 mg KOH/g is obtained.

## Claims

1. Method for obtaining polyols from lignocellulosic biomass relates to the liquefaction of biomass in excess solvent **characterized in that** the said lignocellulosic biomass, containing cellulose and/or hemicellulose and/or lignin and hydroxycinnamic acids and/or ferulic acid ((E)-3-(4-hydroxy-3-methoxy-phenyl)prop-2-enoic acid) and/or coumaric acid ((E)-3-(4-hydroxyphenyl)-2-propenoic acid) in the amount ranging from 0.001 to 20 wt.% of total biomass, is dried until reaching the moisture content not higher than 30%, then it is liquefied by a chemical process or by means of microwave irradiation at a temperature of 100-300°C for 1-600 min with the application of solvents such as, alcohols from the class methanol, ethanol, propanol, butanol, pentanol, hexanol, and/or diols from the class ethane-1,2-diol, propane-1,3-diol, propane-1,2-diol, butane-1,3-diol, butane-1,4-diol, butane-2,3-diol and/or 2,2'-oxydiethanol and/or propane-1,2,3-triol and/or butane-1,2,3,4-tetraol (erythritol) and/or pentane-1,2,3,4,5-pentaol (ribitol) and/or polyhydroxy alcohols from the class poly(ethylene oxide), ethylene carbonate and/or glycerin filtrate effluent glycerin and/or raw glycerin.

2. The method of claim 1 **characterized in that** brewer's spent grain is used as lignocellulosic biomass.

3. The method of claim 1 or claim 2 **characterized in that** the liquefaction via chemical reactions is conducted under a pressure of 1000-150000 Pa in the presence of strongly acidic or strongly basic catalysts such as, potassium hydroxide, sodium hydroxide, calcium hydroxide, magnesium hydroxide, aluminum hydroxide, iron hydroxide, nitrogen trihydride (ammonia), sulfuric(IV) acid, sulfuric(VI) acid, orthophosphoric acid, hydrochloric acid, nitric(III) acid, nitric(V) acid, chloric(III) acid, chloric(V) acid, chloric(VII) acid.

4. The method of claim 1 or claim 2 **characterized in that** the liquefaction process is conducted by means of microwave irradiation at a power level of 50-750W.
